# DEMANDE DE BREVET EUROPEEN

(11) **EP 3 772 760 A1**
(43) Date de publication de la demande: **10.02.2021**
(21) Numéro de dépôt: 19190535.5
(22) Date de dépôt: 07.08.2019
(51) Int. Cl.: H01M 2/10, B60L 50/64, B62K 19/40, B62M 6/90

(54) **DISPOSITIF DE STOCKAGE D ÉNERGIE ÉLECTRIQUE DESTINÉ À ÊTRE FIXÉ À L EXTÉRIEUR D'UN VÉHICULE DE TYPE VÉLO OU TROTTINETTE ÉLECTRIQUE**

(71) Demandeur: Birota, 92170 Vanves (FR)
(72) Inventeur: LE RODALLEC, Arnaud, 75006 Paris (FR); CARREEL, Eric, 92190 MEUDON (FR); SAUVAGEOT, Pierre, 78210 Saint Cyr L'Ecole (FR); RETIERE, Thibault, 44100 Nantes (FR)
(74) Mandataire: Ipside

(57) **Abrégé**

L'invention concerne un dispositif (100) de stockage d'énergie électrique configuré pour coopérer avec une surface d'une structure d'un véhicule, ladite surface étant orientée vers l'extérieur de la structure, comprenant un moyen de connexion électrique entre le dispositif de stockage d'énergie électrique et un circuit électrique de la structure.

Un tel dispositif de stockage d'énergie électrique comprend également un premier moyen (120) de glissement configuré sur une face du dispositif de stockage d'énergie électrique, le moyen de glissement comprenant un des deux éléments d'une liaison en queue d'aronde, le premier moyen de glissement coopérant de manière complémentaire avec un second moyen de glissement présentée par la surface extérieure de la structure, le second moyen de glissement étant l'autre élément de la liaison en queue d'aronde.

## Description

### DOMAINE TECHNIQUE DE L'INVENTION

Le domaine de l'invention est celui des batteries personnelles.

Plus précisément, l'invention concerne un dispositif de stockage d'énergie électrique destiné à être fixé à l'extérieur d'un véhicule.

L'invention trouve notamment des applications pour des vélos ou des trottinettes ayant une assistance électrique à la propulsion. De tels véhicules, couramment appelés vélos électriques ou trottinettes électriques, sont régulièrement inclus dans une flotte de véhicules partagés déployés sur un territoire.

### ÉTAT DE LA TECHNIQUE

Il est connu de l'art antérieur des techniques de stockage extérieur d'énergie électrique pour un véhicule de type vélo électrique ou trottinette électrique.

De telles techniques sont généralement constituées d'une batterie incluse dans un boitier de forme parallélépipédique venant s'insérer dans un logement de forme complémentaire présenté par le véhicule.

Toutefois, de telles batteries sont généralement utilisées pour un véhicule personnel et non pour un véhicule partagé où un utilisateur souhaitant bénéficier généralement du stockage d'énergie interne et non amovible du véhicule partagé. En outre, de telles batteries présentent l'inconvénient majeur d'être encombrantes, pouvant difficilement s'insérer dans un sac personnel de type sac à dos ou sac à main.

Afin de remédier à ce problème, il est notamment connu de réduire la taille de la batterie personnelle et de prévoir un logement de la batterie personnelle, qui soit facile d'accès. De telle batterie personnelle présente généralement deux glissières parallèles configurées sur deux faces opposées de la batterie personnelle.

L'inconvénient majeur de ce type de batterie personnelle est qu'outre leur autonomie relativement faible, leur installation ne peut être effectuée qu'entre deux rails de glissement présentés par le véhicule, ce qui réduit le nombre d'emplacement possible sur le véhicule. Dans l'art antérieur, de telles batteries sont généralement placées au niveau du guidon ou du panier où il est possible de placer deux rails de glissement parallèle, tout en permettant à la batterie d'être facilement accessible par l'utilisateur.

Aucun des systèmes actuels ne permet de répondre simultanément à tous les besoins requis, à savoir de proposer une technique de stockage d'énergie électrique qui puisse être fixé en un point quelconque du cadre d'un véhicule tel qu'une bicyclette ou une trottinette, tout en étant facile d'accès pour un utilisateur, transportable aisément dans un sac et en étant maintenu lors du déplacement du véhicule.

### EXPOSÉ DE L'INVENTION

Ces objectifs, ainsi que d'autres qui apparaîtront par la suite sont atteints à l'aide d'un dispositif de stockage d'énergie électrique configuré pour coopérer avec une surface d'une structure d'un véhicule, ladite surface étant orientée vers l'extérieur de la structure, comprenant un moyen de connexion électrique entre le dispositif de stockage d'énergie électrique et un circuit électrique de la structure.

Le dispositif de stockage d'énergie électrique, couramment appelé batterie, est ici destiné à venir se connecter sur une surface extérieure du véhicule qui est généralement un vélo, également appelé cycle ou bicyclette, ou une trottinette.

Il convient de souligner que le dispositif de stockage d'énergie électrique est amovible afin de pouvoir être emporté dans le but par exemple de le recharger en le connectant sur une prise électrique avec éventuellement un adaptateur.

Selon l'invention, le dispositif de stockage d'énergie électrique comprend également un premier moyen de glissement configuré sur une face du dispositif de stockage d'énergie électrique, le moyen de glissement comprenant un des deux éléments d'une liaison en queue d'aronde, le premier moyen de glissement coopérant de manière complémentaire avec un second moyen de glissement présentée par la surface extérieure de la structure, le second moyen de glissement étant l'autre élément de la liaison en queue d'aronde.

Ainsi, le dispositif de stockage d'énergie peut facilement être remis et retiré du véhicule.

En outre, la liaison de type queue d'aronde permet de maintenir le dispositif de stockage d'énergie en place sur le véhicule de manière simple et efficace, sans risque de décrochage inopiné pendant l'utilisation du véhicule.

Enfin, la liaison de type queue d'aronde étant effectué comprenant une seule glissière offre plus de possibilités d'installation du dispositif de stockage d'énergie sur le véhicule. Le dispositif de stockage d'énergie peut notamment venir se glisser sur une queue d'aronde configurée sur un tube d'un cadre d'un vélo

Dans des modes de réalisation particuliers de l'invention, le premier moyen de glissement est une rainure présentée sur la face du dispositif de stockage d'énergie électrique, tandis que le second moyen de glissement complémentaire est un tenon de forme complémentaire à la rainure, le tenon se dressant à la surface extérieure de la structure du véhicule.

Dans des modes de réalisation particuliers de l'invention, le moyen de connexion électrique comprend au moins une paire de connecteurs espacés selon l'axe du glissement de la liaison en queue d'aronde, chaque connecteur de la paire étant situé à proximité d'un bord opposé du dispositif de stockage d'énergie électrique.

Ainsi, le risque de court-circuit entre les deux connecteurs d'une paire de connecteurs est minimisé.

Dans des modes de réalisation particuliers de l'invention, les deux connecteurs sont chacun à une hauteur distincte par rapport au plan tangent à ladite face.

Ainsi, le risque de court-circuit est d'autant plus minimisé que les connecteurs d'au moins une paire de connecteurs sont distants et à une hauteur différente par rapport à la surface extérieure du véhicule.

Dans des modes de réalisation particuliers de l'invention, au moins une paire de connecteurs comprend un connecteur à la surface d'un bossage formant une butée du moyen de glissement de type queue d'aronde.

Ainsi, le bossage permet à la fois de surélever un connecteur d'une paire de connecteur par rapport à l'autre connecteur de la paire et de former une butée d'arrêt de la queue d'aronde.

Dans des modes de réalisation particuliers de l'invention, le dispositif de stockage d'énergie électrique comprend également un logement apte à recevoir un poussoir se dressant à la surface extérieure de la structure et/ou un poussoir apte à s'insérer dans un logement configuré à la surface extérieure de la structure.

Ainsi, le dispositif de stockage d'énergie électrique ne peut glisser sans l'action d'une force parallèle à l'axe de glissement de la liaison en queue d'aronde. Généralement, le poussoir comprend un ressort dont la force de rappel est configurée afin de maintenir le dispositif de stockage d'énergie électrique en place tout en permettant à un individu de retirer facilement le dispositif de stockage d'énergie électrique.

Avantageusement, la force du poussoir est comprise entre 1 kg et 2 kg.

Dans des modes de réalisation particuliers de l'invention, le logement et un connecteur à proximité d'une extrémité ouverte du moyen de glissement de type queue d'aronde sont espacés selon un axe non parallèle à l'axe de glissement.

Ainsi, le poussoir peut glisser le long de l'axe de glissement sans créer de court-circuit avec le connecteur ni l'abîmer.

Dans des modes de réalisation particuliers de l'invention, le dispositif de stockage d'énergie électrique est cylindrique et comprend à l'intérieur du cylindre dix cellules de stockage d'énergie formant deux rangées, les cellules occupant deux tiers d'une section du cylindre, le tiers restant étant occupé par un module électronique de gestion des cellules.

Le module électronique de gestion des cellules est généralement connu sous le nom anglais de « *Battery Management System* » (BMS).

Il convient de souligner que l'espace intérieur est optimisé afin de permettre d'obtenir une densité importante d'énergie stockée. En outre, les vis permettant de maintenir les deux couvercles aux extrémités du cylindre sont positionnées de manière adéquate afin de permettre cette optimisation en densité d'énergie stockée.

Dans des modes de réalisation particuliers de l'invention, les cellules formant les deux rangées sont espacées chacune d'environ un millimètre.

Dans des modes de réalisation particuliers de l'invention, le diamètre de la section du cylindre est de l'ordre de six centimètres.

Ainsi, le dispositif de stockage d'énergie électrique peut être maintenu verticalement dans un porte-gobelet.

Dans des modes de réalisation particuliers de l'invention, le dispositif de stockage d'énergie électrique comprend également un connecteur de type USB-C, le module électronique de gestion des cellules comprenant une électronique de puissance configurée pour ajuster les niveaux de tensions au niveau du connecteur de type USB-C.

Le connecteur de type USB-C peut être utilisé afin de recharger un appareil électronique externe en le connectant au dispositif de stockage d'énergie électrique. Inversement, le connecteur de type USB-C peut être utilisé pour recharger les cellules du dispositif de stockage d'énergie électrique en le connectant avec un chargeur standard, tel que celui couramment utilisé pour recharger un appareil électronique portable, tel qu'un téléphone portable intelligent également par le terme anglais « *smartphone* » ou un ordinateur portable.

Il convient de souligner que l'ajustement des niveaux de tensions au niveau du connecteur de type USB-C s'adapte généralement dans les deux modes de fonctionnements, soit la recharge des cellules du dispositif de stockage d'énergie électrique, soit l'utilisation de l'énergie stockée pour recharger un appareil électronique externe.

Dans des modes de réalisation particuliers de l'invention, le dispositif de stockage d'énergie électrique est étanche.

L'invention vise également une structure d'un véhicule, comprenant sur une surface orientée vers l'extérieur un moyen de glissement comprenant un des deux éléments d'une liaison en queue d'aronde, l'autre élément de la liaison en queue d'aronde étant configuré sur une face d'un dispositif de stockage d'énergie électrique selon l'un quelconque des modes de réalisation précédents.

Préférentiellement, le véhicule est une bicyclette ou une trottinette.

Avantageusement, le moyen de glissement configuré sur la surface orientée vers l'extérieur est orienté sensiblement verticalement avec une inclinaison maximale de l'ordre de 45° par rapport à la verticale lorsque le véhicule est dans une position usuelle de mouvement.

La position usuelle de mouvement d'un véhicule tel qu'une bicyclette ou une trottinette correspond à la position d'équilibre du véhicule, les roues étant parallèles.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
la figure 1 est une vue en perspective du dispositif de stockage d'énergie électrique selon un exemple de mode de réalisation de l'invention ;
la figure 2 est une vue en perspective du dispositif de la figure 1 venant s'insérer sur une pièce de liaison complémentaire présentée par un véhicule ;
la figure 3 est une vue en perspective et en coupe du dispositif de la figure 1 assemblé à la pièce de liaison du véhicule de la figure 2 ;
la figure 4 est une vue en perspective du dispositif de la figure 1 ;
la figure 5 est une vue en coupe longitudinale de l'assemblage de la figure 3 ;
la figure 6 est une vue en coupe latérale du dispositif de la figure 1.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de mise de réalisation particulier

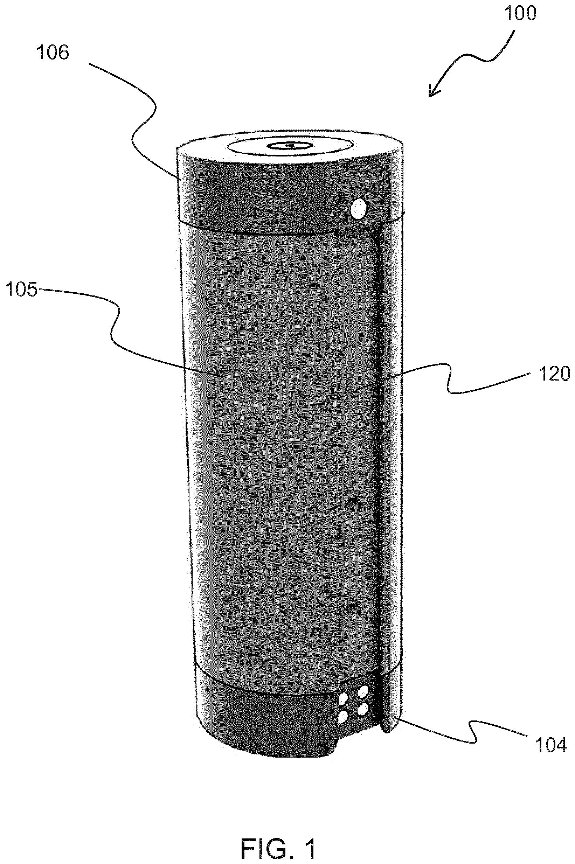

La figure 1 est une vue en perspective d'un dispositif 100 de stockage d'énergie électrique, selon l'invention, couramment appelée batterie. Le dispositif 100 de stockage d'énergie électrique est dans le présent exemple non limitatif de l'invention de forme globale cylindrique de diamètre d'environ 64 millimètres.

Le dispositif 100 comprend un tube 105 creux dans lequel viennent s'insérer des cellules de stockage d'énergie électrique (non représentées sur la figure 1). Le tube 105 est fermé à une de ces extrémités par un fond 104 fixe à l'autre extrémité par un bouchon 106 maintenu par des vis. Le dispositif 100 de stockage d'énergie électrique, destiné à être maintenu à l'extérieur d'un véhicule, est avantageusement étanche, l'étanchéité étant réalisée par un joint plat configuré entre le tube cylindrique 105 et le bouchon 106. En outre, les vis sont cachées et protégées chacune par un capuchon en caoutchouc (non représenté sur la figure 1), contribuant à l'étanchéité du dispositif 100 de stockage d'énergie électrique, et qui pourrait servir à actionner un potentiel bouton placé entre la vis et le capuchon.

Le dispositif 100 de stockage d'énergie électrique est configuré pour être installé et retiré aisément par un individu utilisant le véhicule. Le dispositif 100 de stockage d'énergie électrique est ainsi utilisé comme batterie personnelle portative venant en complément ou en remplacement d'une éventuelle batterie interne du véhicule.

Afin d'être facilement installé ou retiré, le dispositif 100 de stockage d'énergie électrique comprend une rainure 120 de forme complémentaire à un tenon présenté par une surface extérieure du véhicule. La rainure 120 et le tenon forme les deux éléments complémentaires d'une liaison en queue d'aronde, apte à glisser l'un par rapport à l'autre.

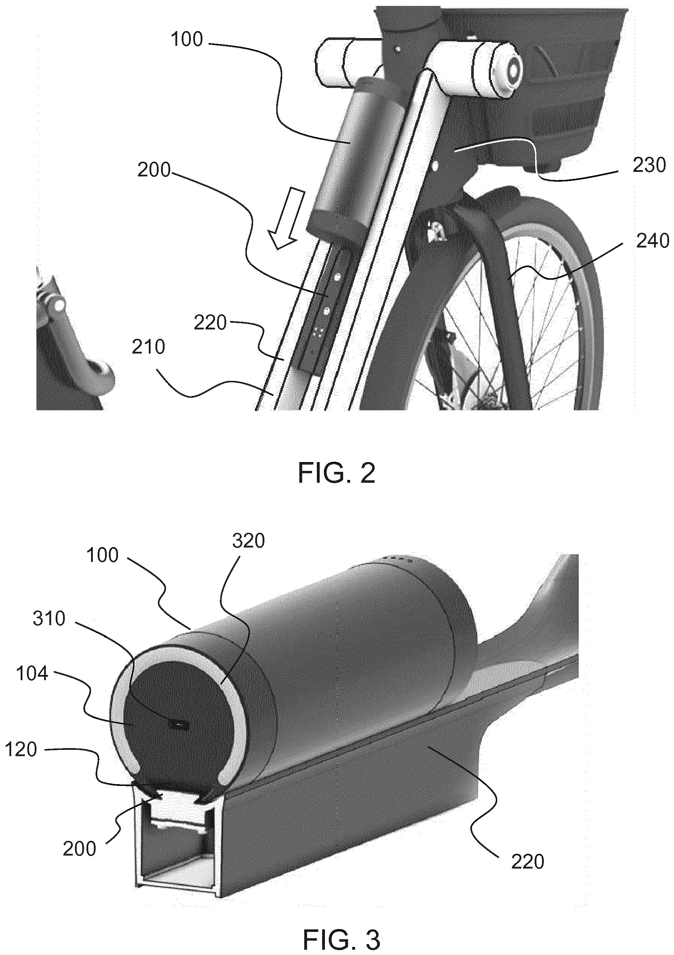

La figure 2 illustre l'insertion du dispositif 100 de stockage d'énergie électrique sur le tenon 200 présenté par un cadre 210 d'un véhicule qui est ici une bicyclette. La figure 3 est quant à elle une vue en perspective du dessous du dispositif 100 de stockage d'énergie électrique inséré sur le tenon 200 en coupe.

Le tenon 200 est ici configuré sur un tube diagonal 220 du cadre 210, reliant un pédalier (non représenté sur la figure 2) à un tube de direction 230 dans lequel pivote une fourche 240 par l'intermédiaire d'un guidon (non représenté sur la figure 2).

La rainure 120 du dispositif 100 de stockage d'énergie électrique vient se glisser sur le tenon 200 afin de maintenir le dispositif 100 de stockage d'énergie électrique en place lors des déplacements de la bicyclette.

Il convient de souligner que dans le présent exemple non limitatif de l'invention, le tube diagonal 220 est notamment double pour des raisons de design. Toutefois, le tenon 200 peut être fixé à n'importe quelle surface de la bicyclette, notamment à l'extérieur d'un tube quelconque. Le maintien du dispositif 100 de stockage d'énergie électrique est ainsi avantageusement effectué par une seule pièce, ce qui offre plus de possibilité de positionner le tenon 200 formant un support du dispositif 100 de stockage d'énergie électrique que dans le cas d'un support comprenant deux pièces de maintien.

Par ailleurs, la liaison en queue d'aronde est avantageusement orientée selon un axe sensiblement vertical, l'insertion du dispositif 100 de stockage d'énergie électrique s'effectuant sensiblement de haut en bas. Cette orientation permet d'assurer un maintien latéral du dispositif 100 de stockage d'énergie électrique, évitant tout risque de chute intempestive du dispositif 100 de stockage d'énergie électrique pendant un déplacement du véhicule.

Il convient de souligner que dans le présent exemple non limitatif de l'invention, la liaison en queue d'aronde, étant parallèle au tube diagonal 220, est inclinée d'environ 30° par rapport à l'axe vertical, sans perte de maintien latéral.

Afin de pouvoir recharger les cellules du dispositif 100 de stockage d'énergie électrique, voire d'alimenter un dispositif électronique externe connecté au dispositif 100 de stockage d'énergie électrique, le dispositif 100 peut comprendre avantageusement un connecteur 310 de type USB-C traversant le fond 104 du tube creux formant le dispositif 100. Il convient de souligner que le connecteur est avantageusement situé sur le fond 104, qui est orientée vers le bas lorsque le dispositif 100 de stockage d'énergie électrique est installé sur le véhicule. Ainsi, le connecteur 310 de type USB-C est protégé des eaux de pluie qui ne peuvent s'accumuler au niveau du connecteur 310.

Le module électronique de gestion des cellules (BMS) comprend alors une électronique de puissance configurée pour ajuster les niveaux de tensions au niveau du connecteur de type USB-C afin de s'adapter au dispositif électronique externe, soit pour alimenter ce dispositif électronique externe soit pour charger les cellules du dispositif 100.

Le dispositif 100 de stockage d'énergie électrique comprend également un anneau anti-glissement 320 configuré sur ici sur les trois-quarts du pourtour du fond 104. L'anneau anti-glissement 320, réalisé dans une matière de type caoutchouc permet notamment au dispositif 100 de stockage d'énergie électrique de tenir en équilibre lorsqu'il est posé sur le fond 104 selon un axe sensiblement vertical. Il convient de souligner que l'anneau anti-glissement 320 contribue également à l'étanchéité du dispositif 100 de stockage d'énergie électrique.

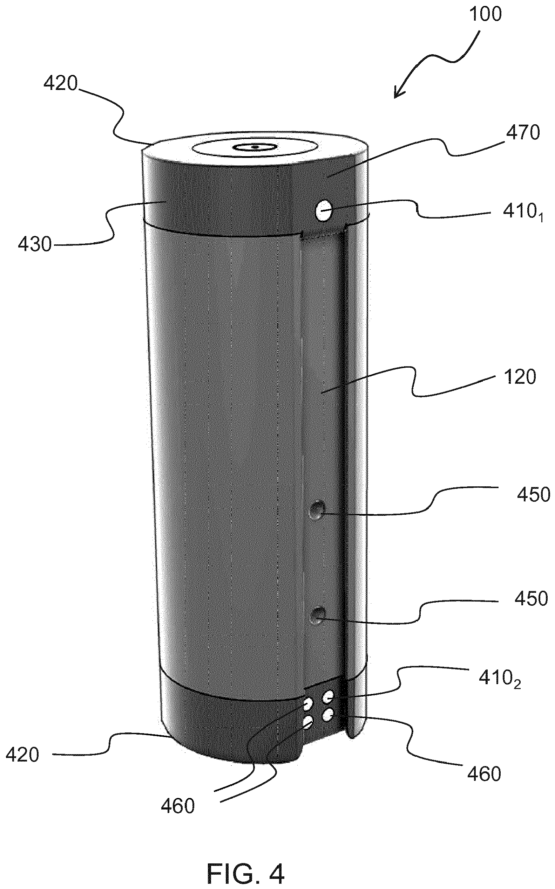

Comme illustré en figure 4 qui est une vue en perspective du dispositif 100 de stockage d'énergie électrique, le dispositif 100 comprend une paire de connecteurs 410 espacées selon l'axe de glissement de la liaison en queue d'aronde, sensiblement dans selon la rainure 120. Afin de limiter le risque de court-circuit entre les deux connecteurs 410 par lesquels transite une énergie électrique d'un courant de 10 A stockée dans le dispositif de stockage électrique, chaque connecteur 410 est situé à proximité d'une face 420 opposée du dispositif 100. Les deux faces 420 correspondent ici aux bases circulaires du cylindre formant le dispositif 100 de stockage d'énergie, c'est-à-dire au fond et au bouchon venant fermer le tube creux.

Afin de limiter d'autant plus le risque de court-circuit, un des deux connecteurs 410 est affleurant d'un bossage 430, à une hauteur positive et non nulle par rapport au fond de la rainure 120, tandis que l'autre est affleurant au fond de la rainure 120. Le bossage 430, ici formé par le bouchon venant fermer le tube creux du dispositif 100 de stockage d'énergie électrique, peut conférer une butée pour le tenon de liaison en queue d'aronde.

En d'autres termes, les deux connecteurs 410 sont chacun à une hauteur distincte par rapport à un plan tangent à la face sur laquelle la rainure 120 est configurée. Le plan tangent est notamment ici parallèle au fond de la rainure 120. Le plan tangent correspond ici à un méplat 470 permettant de déposer le dispositif 100 de stockage d'énergie électrique de façon stable sur un de ses flancs. Cette position stable est d'ailleurs très pratique notamment lorsque le connecteur de type USB-C présent sur le fond du dispositif 100 de stockage d'énergie électrique est branché.

Il convient de souligner que le connecteur 410₁ affleurant au bossage 430 peut être sur un plan de symétrie du dispositif 100 de stockage d'énergie électrique, le plan de symétrie comprenant l'axe de glissement de la liaison en queue d'aronde. Toutefois, l'autre connecteur 410₂ est espacé perpendiculairement par rapport au plan de symétrie afin de ne pas être en contact avec un poussoir à billes (non représenté sur la figure 4) présenté par le véhicule et qui est configuré pour s'insérer dans un logement 450 positionné au fond de la rainure 120, dans le plan de symétrie 440.

En complément, le dispositif 100 de stockage d'énergie électrique comprend également trois autres connecteurs 460 également espacés perpendiculairement par rapport au plan de symétrie 440 pour les mêmes raisons qu'évoquées précédemment. Parmi les trois connecteurs 460, deux sont dédiées à une communication avec le véhicule et le troisième permet au dispositif 100 de stockage d'énergie électrique de passer d'un état de veille à un état de fonctionnement.

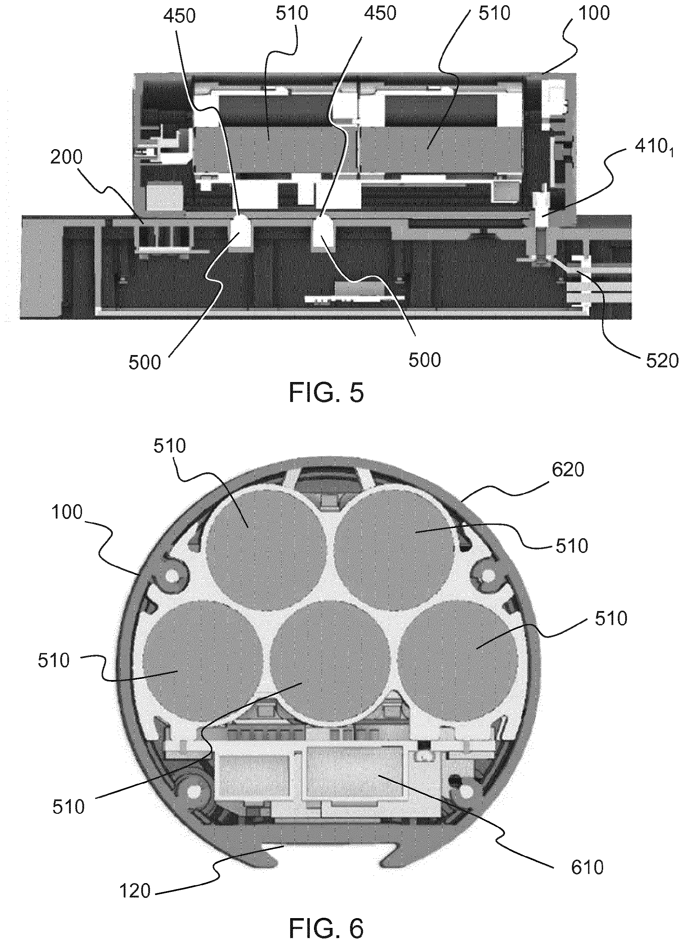

Comme illustré sur la figure 5 qui est une vue en coupe selon le plan de symétrie du dispositif 100 de stockage d'énergie électrique inséré sur le tenon 200, le tenon 200 comprend avantageusement deux poussoirs à billes 500 pour empêcher le dispositif 100 de stockage d'énergie électrique de glisser le long du tenon 200 pendant les déplacements du véhicule. Les deux poussoirs à billes 500 comprennent notamment chacun un ressort configuré pour plaquer une bille dans un des deux logements 450 tout en permettant à un utilisateur de pouvoir retirer le dispositif 100 de stockage d'énergie électrique sans difficulté.

Lorsque le dispositif 100 de stockage d'énergie électrique est inséré sur le tenon 200, une connexion électrique est effectuée entre au moins une cellule 510 de stockage d'énergie électrique et un circuit électrique 520 du véhicule, par exemple relié à un dispositif d'assistance électrique au pédalage dans le cas d'une bicyclette électrique, ou d'assistance électrique à la propulsion dans le cas d'une trottinette électrique.

Le dispositif 100 de stockage d'énergie électrique comprend dans le présent exemple non limitatif de l'invention dix cellules de stockage d'énergie électrique réparties sur deux rangées et deux étages.

Comme illustré en figure 6 qui est une vue en coupe du dispositif 100 de stockage d'énergie électrique, les deux rangées sont configurées de manière optimale afin de laisser un espace libre à un module 610 électronique de gestion des cellules, également connu sous le nom anglais « *Battery Management System* » (BMS). Environ deux tiers de la section du cylindre est occupé par les deux rangées de cellules 510, la première au centre comprenant trois cellules 510, la seconde deux cellules 510.

L'espace entre chaque cellule 510 est de l'ordre d'un millimètre permettant à la fois d'optimiser l'espace interne et à la chaleur dégagée par les cellules 510 de se dissiper.

L'enveloppe 620 du cylindre formant le dispositif 100 de stockage d'énergie électrique est avantageusement en aluminium permettant à la chaleur dissipée à l'intérieur de se dissiper facilement vers l'extérieur. En outre, l'enveloppe en aluminium permet au dispositif 100 de stockage d'énergie électrique d'être léger tout en étant robuste au choc.

Afin de pouvoir communiquer avec un dispositif électronique distant, tel qu'un téléphone portable intelligent couramment appelé par le terme anglais « *smartphone* », porté par l'individu, ou avec un dispositif électronique du véhicule, le dispositif 100 de stockage d'énergie électrique comprend un moyen de communication sans fil de type Bluetooth Low Energy® (BLE). Ce moyen de communication sans fil relié au module électronique BMS permet de transmettre une identification liée au dispositif 100 de stockage d'énergie électrique, voire le niveau de charge du stockage.

Dans des variantes de ce mode de réalisation particulier de l'invention, le dispositif 100 de stockage d'énergie comporte un moyen de communication filaire en lieu et place du moyen de communication sans fil de type BLE, le moyen de communication filaire étant reliée avec un dispositif électronique du véhicule lorsque le dispositif 100 de stockage d'énergie électrique est en place sur ce véhicule. Il convient de souligner que dans ces variantes de réalisation, il est possible d'adjoindre au dispositif 100 de stockage d'énergie électrique un module complémentaire permettant d'ajouter cette fonction de communication sans fil de type BLE.

L'individu cherchant à prendre un véhicule parmi une flotte de véhicules partagés où chaque véhicule comprend un moyen de stockage d'énergie électrique interne, et disposant d'un dispositif 100 de stockage d'énergie suffisamment chargé, peut alors utiliser un véhicule partagé disposant d'un faible stockage d'énergie électrique afin de laisser un véhicule partagé plus chargé à un individu ne disposant pas de dispositif 100 de stockage d'énergie électrique. L'individu connecte alors son dispositif 100 de stockage d'énergie au véhicule correspondant par l'intermédiaire de la liaison en queue d'aronde. Le véhicule qui est par exemple une bicyclette à assistance électrique au pédalage utilise alors préférentiellement l'énergie stockée dans le dispositif 100 de stockage d'énergie électrique de l'individu afin d'alimenter le dispositif d'assistance au pédalage de la bicyclette.

Il convient de souligner que le moyen de communication sans fil du dispositif 100 de stockage d'énergie électrique peut avantageusement comprendre un accéléromètre afin d'activer la communication sans fil uniquement lorsqu'un mouvement est détecté, ce qui permet notamment d'économiser l'énergie électrique au repos ou pendant l'état de veille.

## Revendications

1. Dispositif (100) de stockage d'énergie électrique configuré pour coopérer avec une surface d'une structure (210) d'un véhicule, ladite surface étant orientée vers l'extérieur de la structure, comprenant un moyen (410) de connexion électrique entre le dispositif de stockage d'énergie électrique et un circuit électrique (520) de la structure, **caractérisé en ce qu'**il comprend également un premier moyen (120) de glissement configuré sur une face du dispositif de stockage d'énergie électrique, le moyen de glissement comprenant un des deux éléments d'une liaison en queue d'aronde, le premier moyen de glissement coopérant de manière complémentaire avec un second moyen (200) de glissement présentée par la surface extérieure de la structure, le second moyen de glissement étant l'autre élément de la liaison en queue d'aronde.

2. Dispositif de stockage d'énergie électrique selon la revendication 1, dans lequel le premier moyen de glissement est une rainure (120) présentée sur la face du dispositif de stockage d'énergie électrique, tandis que le second moyen de glissement complémentaire est un tenon (200) de forme complémentaire à la rainure, le tenon se dressant à la surface extérieure de la structure du véhicule.

3. Dispositif de stockage d'énergie électrique selon l'une quelconque des revendications 1 à 2, dans lequel le moyen de connexion électrique comprend au moins une paire de connecteurs (410) espacés selon l'axe du glissement de la liaison en queue d'aronde, chaque connecteur de la paire étant situé à proximité d'une face (420) opposé du dispositif de stockage d'énergie électrique.

4. Dispositif de stockage d'énergie électrique selon la revendication 3, dans lequel les deux connecteurs sont chacun à une hauteur distincte par rapport au plan tangent à ladite face.

5. Dispositif de stockage d'énergie électrique selon la revendication 4, dans lequel au moins une paire de connecteurs comprend un connecteur à la surface d'un bossage (430) formant une butée du moyen de glissement de type queue d'aronde.

6. Dispositif de stockage d'énergie électrique selon l'une quelconque des revendications 1 à 5, comprenant également un logement (450) apte à recevoir un poussoir (500) se dressant à la surface extérieure de la structure et/ou un poussoir apte à s'insérer dans un logement configuré à la surface extérieure de la structure.

7. Dispositif de stockage d'énergie électrique selon la revendication 6, dans lequel le logement et un connecteur à proximité d'une extrémité ouverte du moyen de glissement de type queue d'aronde sont espacés selon un axe non parallèle à l'axe de glissement.

8. Dispositif de stockage d'énergie électrique selon l'une quelconque des revendications 1 à 7, de forme cylindrique, comprenant à l'intérieur du cylindre dix cellules (510) de stockage d'énergie formant deux rangées, les cellules occupant deux tiers d'une section du cylindre, le tiers restant étant occupé par un module électronique (610) de gestion des cellules (BMS).

9. Dispositif de stockage d'énergie électrique selon la revendication 8, dans lequel les cellules formant les deux rangées sont espacées chacune d'environ un millimètre.

10. Dispositif de stockage d'énergie électrique selon l'une quelconque des revendications 8 à 9, dont le diamètre de la section du cylindre est de l'ordre de six centimètres.

11. Dispositif de stockage d'énergie électrique selon l'une quelconque des revendications 8 à 10, comprenant également un connecteur (310) de type USB-C, le module électronique de gestion des cellules comprenant une électronique de puissance configurée pour ajuster les niveaux de tensions au niveau du connecteur de type USB-C.

12. Dispositif de stockage d'énergie électrique selon l'une quelconque des revendications 1 à 11, **caractérisé en ce qu'**il est étanche.

13. Structure (210) d'un véhicule, comprenant sur une surface orientée vers l'extérieur un moyen de glissement comprenant un des deux éléments d'une liaison en queue d'aronde, l'autre élément de la liaison en queue d'aronde étant configuré sur une face d'un dispositif de stockage d'énergie électrique selon l'une quelconque des revendications 1 à 12.

14. Structure de véhicule selon la revendication 13, dans laquelle le véhicule est une bicyclette ou une trottinette.
